# EUROPÄISCHE PATENTSCHRIFT

(11) **EP 0 710 428 B1**
(45) Veröffentlichungstag und Bekanntmachung des Hinweises auf die Patenterteilung: **13.05.1998**
(21) Anmeldenummer: 94925366.0
(22) Anmeldetag: 19.07.1994
(51) Int. Cl.: H05B 39/04, H05B 33/08, H02M 3/156

(54) **VORRICHTUNG ZUM SPEISEN EINER ELEKTRISCHEN LAST**
DEVICE FOR FEEDING AN ELECTRIC LOAD
DISPOSITIF PERMETTANT D'ALIMENTER UNE CHARGE ELECTRIQUE

(30) Priorität: 20.07.1993 DE 4324331
(43) Veröffentlichungstag der Anmeldung: 08.05.1996
(73) Patentinhaber: NICO-ELEKTRO AKTIENGESELLSCHAFT, FL-9490 Vaduz (LI)
(72) Erfinder: SOKOLOV, Vladimir, D-61107 Ljubljana (SI)
(74) Vertreter: Klunker . Schmitt-Nilson . Hirsch
(86) Internationale Anmeldenummer: EP9402375
(87) Internationale Veröffentlichungsnummer: WO9503681

(56) Entgegenhaltungen:
- DE-A- 2 705 540
- DE-A- 3 920 847
- US-A- 4 215 339
- US-A- 4 964 028
- US-A- 5 130 608

## Beschreibung

Die Erfindung bezieht sich auf eine Vorrichtung zum Speisen einer eine vorgegebene Nennspannung aufweisenden elektrischen Last, mit einem Eingang für den Anschluß an eine Versorgungsspannungsquelle und einem Ausgang für den Anschluß an die Last, und mit einem Nadelimpulsformer, der an den an die Last angeschlossenen Ausgang einen Zug von Nadelimpulsen legt.

Das Speisen einer elektrischen Last mit Gleichstrom und das Speisen einer elektrischen Last mit Wechselstrom haben jeweils Vorteile und Nachteile. Speziell bei Glühbirnen und anderen Beleuchtungskörpern wurde versucht, durch Verbesserung des Wirkungsgrads eine erhöhte Lichtausbeute (bei gegebener elektrischer Leistung) zu erreichen.

Zum Speisen elektrischer Lasten ist es insbesondere auch bei Schrittmotoren oder dergleichen bekannt, an die Last eine impulsförmige Speisespannung zu legen, wobei das Tastverhältnis des Impulszugs, d. h. das Verhältnis von Impulsbreite zu Impulspause, die der Last zugeführte Leistung von 0% - 100% bestimmt. Im Extremfall einer solchen impulsförmigen Speisung wird der Last reiner Gleichstrom zugeführt. Die Impulsbreite beträgt dann 100%, die Pause aber 0%, was einem Tastverhältnis (Impuls/Pause) von Unendlich entspricht. Die Spannungsamplitude der Spannungsimpulse muß dabei jeweils der Nennspannung der Last entsprechen.

Eine Vorrichtung der eingangs genannten Art ist aus US-A-5 130 608 bekannt. Bei der bekannten Vorrichtung liegt am Eingang eine Wechselspannung mit 100 V Spannungsamplitude, am Ausgang ist eine Glühbirne angeschlossen, der Impulse mit einer Spannungsamplitude von 100 V und sehr kurzer Zeitdauer zugeführt werden.

Die vorliegende Erfindung zielt darauf ab, beim Speisen einer elektrischen Last einen im Vergleich zum Stand der Technik wesentlich höheren Wirkungsgrad zu erreichen, insbesondere bei Ohm'schen Lasten, z. B. Glühbirnen, aber auch bei rein oder überwiegend induktiven oder kapazitiven Lasten, die einen schlechten Wirkungsgrad aufweisen, um eine bessere Ausnutzung der elektrischen Energie zu erreichen.

Nach einem ersten Aspekt der Erfindung ist die Vorrichtung dadurch gekennzeichnet, daß die Spannungsamplitude der Nadelimpulse mindestens um den Faktor 1,7, aber höchstens um den Faktor "Quadratwurzel aus Dauer der Impulspause dividiert durch Impulsdauer" größer als die Nennspannung ist.

Nach einem zweiten Aspekt der Erfindung ist die Vorrichtung dadurch gekennzeichnet, daß der Nadelimpulsformer mit einer elektronischen Schaltung aufgebaut ist, die aufweist:
(a) einen von einer Konstantstromquelle aufladbaren Kondensator,
(b) einen mit zwei Widerständen gebildeten Spannungsteiler zur Erzeugung einer Referenzspannung;
(c) einen an die Referenzspannung und die Kondensatorspannung angeschlossenen Unijunktionstransistor, der zündet, sobald die Kondensatorspannung etwas größer als die Referenzspannung wird;
(d) und einen an den Unijunktionstransistor und den Kondensator angeschlossenen Endtransistor, der durch das Zünden des Unijunktionstransistors für die Dauer eines Nadelimpulses leitend geschaltet wird.

Aus der DE-A-39 20 847 ist es bekannt, eine Glühlampe mit Rechteckimpulsen zu speisen, die eine über der Nennspannung liegende Spannungsamplitude haben. Das Verhältnis der Spannungsamplitude der Rechteckimpulse zu der Nennspannung liegt außerhalb des erfindungsgemäßen Bereichs. Außerdem ist kein Wert auf nadelimpulsartig schmale Impulse gelegt.

Im Idealfall handelt es sich bei den Nadelimpulsen der erfindungsgemäßen Vorrichtungen um Dirac-Stöße, d.h. um Impulse mit extrem hoher Amplitude und extrem geringer, aber stabiler Impulsdauer.

Die Amplitude die der Last zugeführten Nadelimpulse wird durch die momentan verfügbaren elektronischen Schaltungsmittel zum Erzeugen der Impulse begrenzt. Mit derzeitig verfügbaren elektronischen Schaltungsmitteln lassen sich Impulsdauern in der Grössenordnung von 100 Nanosekunden realisieren. Dementsprechend kann man mit sehr hohen Spannungen arbeiten, die um einen Faktor im Bereich einer oder zweier Größenordnungen höher sind als die Nennspannung der Last.

Bei einem herkömmlichen Gleichstromkreis muß man dafür sorgen, daß die der Last zugeführte Speisespannung keinesfalls wesentlich höher ist als die Nennspannung. Man weiß allerdings, daß es einen nahezu proportionalen Zusammenhang zwischen dem Quotienten aus Speisespannung und Nennspannung einerseits und dem Wirkungsgrad des Verbrauchers (= Helligkeit einer Glühbirne) und der Lebensdauer des Verbrauchers anderseits gibt. Speist man z. B. eine Glühbirne mit einer Nennspannung von 100 Volt mit nur einer Spannung von 90 oder gar nur 80 Volt, so verschlechtert sich der Wirkungsgrad, d. h. die Lichtausbeute wird deutlich geringer. Gleichzeitig aber verlängert sich mit abnehmendem Wirkungsgrad die Lebensdauer. Erhöht man die Speisespannung umgekehrt auf 110 oder gar 120 Volt, so wird der Wirkungsgrad, d. h. im vorliegenden Beispiel die Lichtausbeute, besser, jedoch verschlechtert sich die Lebensdauer entsprechend. Liegt die Speisespannung wesentlich über der Nennspannung, beispielsweise um einen Faktor 1,5, so wird die Last innerhalb kurzer Zeit zerstört.

Durch die erfindungsgemäße Maßnahme wird die Lebensdauer der Last keineswegs abträglich beeinflußt, eher noch verlängert. Dadurch, daß die der Last zugeführten Nadelimpulse extrem kurze Dauer haben, wird die Last nicht zerstört, auch dann nicht, wenn die Spannung der Impulse um ein Vielfaches höher liegt als die Nennspannung der Last.

Das Tastverhältnis der Nadelimpulse liegt bei der erfindungsgemäßen Vorrichtung vorzugsweise bei höchstens etwa 0,3, das entspricht einem Verhältnis von Impulsdauer zu Impulspause von beispielsweise 3 zu 10.

Es hat sich gezeigt, daß beim Speisen einer Glühbirne beispielsweise die gleiche Lichtausbeute erzielt werden kann, wenn man anstelle der üblichen Wechselspannung erfindungsgemäß Nadelimpulse mit im Vergleich zu der Nennspannung der Glühbirne um ein Vielfaches höherer Spannungamplitude zuführt und die verbrauchte elektrische Leistung nur einen Bruchteil der früher verbrauchten Leistung beträgt.

Betrachtet man das Spektrum eines Dirac-Stoßes, so zeigt sich eine Vielzahl von Harmonischen. Sämtliche Komponenten werden in der elektrischen Last verbraucht. Speziell bei Lasten, die rein induktiv sind oder induktive Komponenten enthalten, kann man zu der Last eine Diode antiparallel schalten. Hierdurch wird erreicht, daß mögliche reaktive Energie in die Last zurückgeführt wird.

Erfindungsgemäß können die Nadelimpulse eine konstante Impulsbreite haben, sind dabei gleichzeitig aber extrem schmal bei relativ hoher Spannungsamplitude. Es handelt sich in der Regel um Gleichstromimpulse d. h. um Impulse gleicher Polarität.

Die Regelung der Lastansteuerung kann in einfacher Weise durch entsprechende Dehnung der Impulspausen erfolgen. Bei größtmöglicher Leistung in der Last wird das Tastverhältnis (Impulsdauer/Impulspause) auf den größtmöglichen Wert von hier 0,3 eingestellt. Das entsprechende Verhältnis von Speisespannungsamplitude zu Nennspannung beträgt dann etwa 1,7 (Quadratwurzel aus 3). Bei Spannungsverhältnissen (Impulsamplitude/Nennspannung der Last) mit einem kleineren Wert werden keine guten Effekte mehr erzielt, wenngleich noch eine im Vergleich zum Stand der Technik bessere Energieausnutzung erreicht wird. Je größer das Verhältnis von Impulsamplitude zur Nennspannung der Last ist, desto besser ist der erreichte Effekt. Deshalb arbeitet man mit Spannungsverhältnissen von mehr als 1,7; insbesondere Werten von mehr als 3, besonders bevorzugt Werten von mehr als 5. Die Nennspannung der Last soll nicht kleiner sein als die Amplitude der Nadelimpulse, dividiert durch die Quadratwurzel aus der auf die Impulsdauer normierten Impulspause (UZₙₑₙₙ ≥ UB/SQR (t_{P}/t_{I})).

Um hohe Schaltgeschwindigkeiten bei kurzen Impulsen zu erreichen, muß mit elektronischen Schaltern gearbeitet werden. Erfindungsgemäß ist deshalb ein elektronischer schneller Schalter zwischen dem Eingang und dem Ausgang der Vorrichtung vorgesehen. In Frage kommen beispielsweise Feldeffekttransistoren (FET'S) oder Bipolar-Transistoren. Bei Verwendung eines FET's als schnellen Schalter erfolgt eine Ansteuerung mit eingeprägter Spannung. Wird ein Bipolar-Transistor verwendet, erfolgt eine strommäßige Ansteuerung, um den hochohmigen Eingangswiderstand des FET's, bzw. den niederohmigen Eingangswiderstand des Bipolar-Transistors zu berücksichtigen und hohe Schaltgeschwindigkeiten zu erreichen.

Die Verwendung von Nadelimpulsen hoher Spannungsamplitude macht Maßnahmen erforderlich, um eine störende Beeinflussung der Umgebung und insbesondere der Versorgunsspannungsquelle zu vermeiden. Erfindungsgemäß läßt sich der Eingang der Vorrichtung mit einem LC-Filter beschalten. Dieses Tiefpaßfilter ermöglicht die Bereitstellung von Energie für die Nadelimpulse und sichert deren Stabilität, verhindert aber andererseits eine Rückwirkung auf die Spannungsquelle.

Ein Zurückfließen von Energie *aus* der Last in Richtung Versorgungspannungsquelle wird insbesondere verhindert durch eine dem Ausgang der Vorrichtung vorgeschaltete Rückstrom-Sperrdiode.

Die Spannungsamplitude der der Last zugeführten Nadelimpulse hängt zusammen mit dem Tastverhältnis des Nadelimpulszugs. Erfindungsgemäß steht der Wert der Nennspannung mit der Spannungsamplitude der Nadelimpulse rechnerisch über die Quadratwurzel aus dem Tastverhältnis in Verbindung. Bei einem Tastverhältnis t_{I} : t_{P} von 1 : 10 und vorgegebener Nennspannung darf die Spannungsamplitude der Nadelimpulse nicht mehr als etwa das Dreifache der Nennspannung betragen. Bei vorgegebener Höhe der Spannungsimpulse (Batteriespannung) darf die Nennspannung also höchstens um den Faktor entsprechend der Quadratwurzel aus dem Tastverhältnis kleiner sein als die Batteriespannung. Diese Bedingung wurde unter der Voraussetzung gemacht, daß die Last zwar eine viel höhere Leistung empfängt, als die Nennleistung es ausmacht, aber dabei dieselbe Energie, wie konventionell, empfangen soll.

In einer speziellen Anwendung des oben geschilderten Prinzips der Lastansteuerung sieht die Erfindung vor, daß es sich bei der Last um eine elektronische Sirene handelt.

Elektronische Sirenen sind bekannt. Ein elektroakustischer Umformer (Lautsprecher) wird mit Hilfe einer Modulationsstufe über eine Verstärker-Endstufe angesteuert. Die Arbeitsweise dieser bekannten elektronischen Sirene ist grundsätzlich analog. Will man üblicherweise geforderte Lautstärken erzielen (z.B. 115 dB in einer Entfernung von 32 m), so muß beträchtliche Leistung in den Wandler eingespeist werden. Es ist eine Anpassung der charakteristischen Ausgangsimpedanz der Endstufe des Verstärkers an die Impedanz der Last erforderlich. Dies bedingt beträchtliche Verluste.

Die erfindungsgemäße elektronische Sirene besitzt einen Nadelimpulsgenerator, der über einen elektronischen Schalter der Endstufe den elektroakustischen Umformer mit einer Spannungsquelle, insbesondere einer Batterie, verbindet.

Im folgenden werden Ausführungsbeispiele anhand der Zeichnungen näher erklärt. Es zeigen:
- **Fig. 1**: ein Prinzipschaltbild einer Vorrichtung zum Speisen einer elektrischen Last,
- **Fig. 2**: ein Impulsdiagramm für einen realen Nadelimpuls, der dem idealen Dirac-Nadel-Impuls ähnlich ist,
- **Fig. 3**: einen Nadelimpuls-Zug,
- **Fig. 4**: ein Prinzipschaltbild der in **Fig. 1** nur schematisch dargestellten Vorrichtung zum Speisen einer elektrischen Last,
- **Fig. 5**: eine detaillierte Schaltungsskizze des in **Fig. 4** als Block dargestellten Generators für reale Nadel-Impulse (NIG),
- **Fig. 6**: eine Schaltungsanordnung zum Speisen einer Glühbirne aus einer Wechselspannungsquelle mit Hilfe eines Gleichrichters (konventionell) bzw. eines Nadel-Impuls Generators NIG (erfindungsgemäß).
- **Fig. 7**: eine vergleichende Darstellung der Signalformen und der Spektrogramme einer idealen harmonischen Schwingung und vier verschiedene Impulse, von denen die in den zwei obersten Reihen dargestellten Impulse (**Fig. 7** (A) und **7** (B)) den bevorzugten Nadelimpulsen (Ni) entsprechen, und die Impulse gemäß **Fig. 7** (C) und **Fig. 7** (D) auch noch als Nadelimpulse verwendbar sind.
- **Fig. 8**: eine schematische Darstellung typischer Energieflüsse von der Energiequelle über die Last, die grundsätzlich den verschiedenen Wirkungsgrad jeder der drei Lasten veranschaulicht.
- **Fig. 9**: ein Blockdiagramm für das Speisen einer elektronischen Sirene.

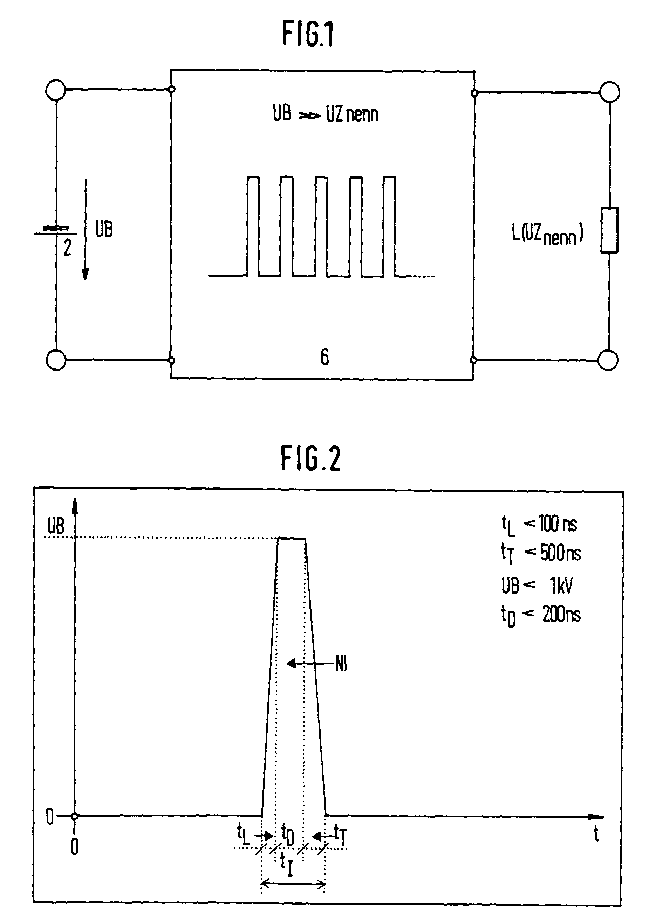

Gemäß **Fig. 1** ist an eine eine Batteriespannung UB aufweisende Spannungsquelle 2 eine Last L, die eine Nennspannung UZₙₑₙₙ aufweist, über eine Schaltvorrichtung 6 angeschlossen.

Bei der Spannungsquelle 2 kann es sich um eine Batterie oder um eine konventionelle Gleichrichteranordnung handeln, welche aus einer Netz-Wechselspannung von beispielsweise 220 V mit Hilfe eines Transformators, eines Gleichrichters und eines Glättungskondensators eine Gleichspannung UB liefert.

Bei der Last L handelt es sich hier speziell um eine Ohm'sche Last, insbesondere um eine elektrische Glühbirne. Die hier beschriebenen Ausführungsbeispiele eignen sich auch für induktive und kapazitive Lasten oder komplexe Lasten (Lasten mit gemischt Ohm'schen, induktiven und kapazitiven Elementen). Besondere Anwendung findet die Erfindung jedoch bei Ohm'schen, induktiven und kapazitiven Lasten mit niedrigem Wirkungsgrad wie Glühbirnen, elektro-akustischen und piezoakustischen Umformern und dergleichen.

Als Beispiel für die Anwendung bei einem elektro-akustischen Umformer als Last wird weiter unten eine elektronische Sirene beschrieben. Sie ist ein gutes Beispiel für die hervorragende Energieausnutzung.

Wie in **Fig. 1** angedeutet ist, ist erfindungsgemäß die Batteriespannung UB um ein Vielfaches größer als die Nennspannung UZₙₑₙₙ der Last L.

In der Schaltvorrichtung 6 wird aus der Batteriespannung UB durch weiter unten noch näher erläuterte schaltungstechnische Maßnahmen ein Zug von Nadelimpulsen (ähnlich den Dirac-Impulsen) erzeugt, wobei die Spannungsamplitude der einzelnen Impulse der Batteriespannung UB entspricht und das Tastverhältnis (Impulsdauer/Impulspause) einstellbar ist und nicht über 0,3 liegt.

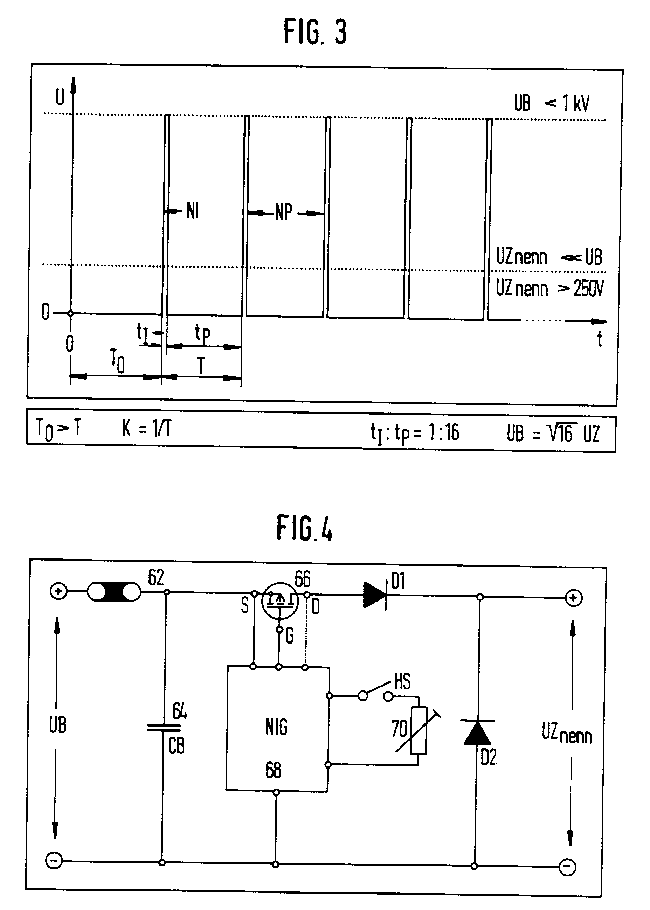

Wie in **Fig. 3** gezeigt ist, haben die dort gezeigten Nadelimpulse eine Spitzenamplitude entsprechend der Batteriespannung UB, die etwa um den Faktor 4 größer ist als die Last-Nennspannung UZₙₑₙₙ. Die Impulsdauer t_{I} verhält sich zu der Impulspause t_{P} etwa wie 1 : 16 beim dargestellten Beispiel. Die "Periodendauer" der einzelnen Impulse beträgt T, außer bei der ersten Periode, To, für die die Ungleichheit To > T gilt. Dies ist schaltungstechnisch bedingt.

**Fig. 2** zeigt einen einzelnen, stabilen Nadelimpuls in vergrößerter Darstellung. Dieser Nadelimpuls stellt eine Annäherung an den (idealen) Dirac-Impuls dar. Die eigentliche Gesamtimpulsdauer beträgt t_{I}. Diese Impulsdauer t_{I} umfaßt eine Anstiegszeit t_{L} von weniger als 100 Nanosekunden, eine "Haltezeit" t_{D} von etwa 100 (höchstens 200) Nanosekunden und eine Abfallzeit t_{T} von weniger als 500 Nanosekunden. Die Batteriespannung UB beträgt zwischen 10 und 1000 V.

**Fig. 4** zeigt die in **Fig. 1** nur schematisch dargestellte Schaltvorrichtung 6 im einzelnen. Links ist der Eingang der Schaltvorrichtung dargestellt, welcher die Batteriespannung UB empfängt, rechts in **Fig. 4** ist der Ausgang dargestellt, an den die Last L angeschlossen ist, welche eine Nennspannung UZₙₑₙₙ aufweist. Am Eingang der Schaltvorrichtung liegt ein LC-Filter aus einer Spule 62 und einem Kondensator 64.

Ein elektronischer, hier als selbstsperrender FET ausgebildeter Schalter 66 wird an seinem Gate-Anschluß G von einem Nadel-Impuls Generator NIG 68 mit eingeprägter Spannung angesteuert. Über den Anschluß signalisiert der Schalter 66 dem NIG einen EIN-oder AUS-Status. Antiparallel zur Last liegt am Ausgang eine Diode D2. Zwischen dem Ausgang und dem elektronischen Schalter 66 befindet sich eine Rückstrom-Sperrdiode D1.

An den NIG 68 ist ein Potentiometer 70 in Serie mit einem Haupt-Schalter HS angeschlossen, mit dessen Hilfe die Pausendauer von einem minimalen bis zu einem unendlichen Pausenwert einstellbar ist. Die unendliche Pause wird mit dem Öffnen des HS eingestellt, was dem Ausschalten des NIG 68 gleicht. Weitere, hier zur Vereinfachung weggelassene Einstell-Elemente ermöglichen noch die Einstellung der Impulsdauer, Blockade und Deblockade des NIG's, die äußere Synchronisation und Modulation des Impulses und, separat, der Impuls-Pause.

Der Betriebsstrom des NIG's 68 gelangt über die Verbindung zwischen dem Source-Anschluss S des FET Schalters 66 und dem NIG 68, und die Verbindung zwischen dem NIG 68 und der gemeinsamen unteren Sammelschiene der Vorrichtung nach **Fig. 4**.

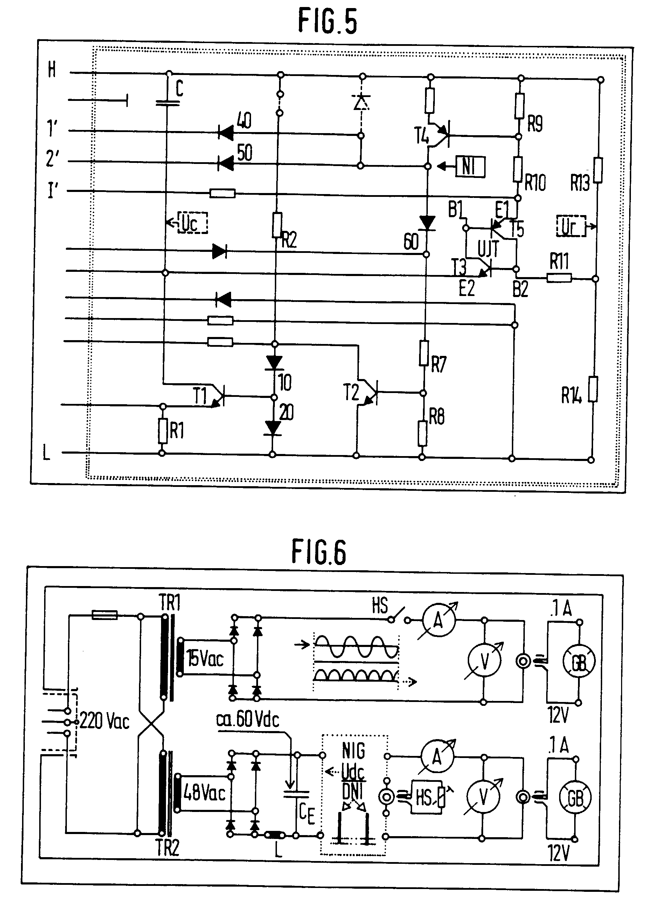

**Fig. 5** zeigt den in der Praxis als einstückiges Modul geringer Abmessungen (10 x 20 x 30 mm) aufgebauten NIG 68 nach **Fig. 4** im einzelnen. Er ist ausgelegt für Batteriespannungen UB zwischen 5 und 100 V. Etwas größere Module für UB zwischen 10 und 1000 V und bis 20 W sind mit derzeit üblichen Bauelementen möglich. Die Entwicklung der elektronischen Bauelemente wird in Zukunft NI-Amplituden von Spannungen im Bereich von vielen zigtausend Volt ermöglichen.

Das größte voreingestellte Tastverhältnis beträgt hier 1 : 9. Durch eine hier nicht näher dargestellte hermetische Einkapselung ist ein stabiler Temperatur-Arbeitsbereich zwischen minus 20 und plus 60°C gewährleistet.

Zwischen den beiden Anschlüssen H und L liegt eine Serienschaltung aus einem Widerstand R2 und zwei Dioden 10 und 20. Bei Anlegen einer Spannung wird durch das dann erhöhte Potential an der Basis des Transistors T1 dieser Transistor T1 geöffnet. Der Transistor T1 arbeitet als Konstantstromquelle und liefert abhängig von der Bemessung eines am Emitter von T1 liegenden Widerstands R1, dem Widerstand R2 und der Diode 20 einen konstanten Strom, durch den der links oben in **Fig. 5** dargestellte Kondensator C aufgeladen wird.

Gleichzeitig fließt rechts in **Fig. 5** ein Strom über die Spannungsteiler-Widerstände R13 und R14, so daß sich zwischen diesen Widerständen eine Referenz-Spannung Ur einstellt. Wenn der Kondensator C vollgeladen ist, beträgt die Kondensatorspannung Uc etwa das 1,05-fache der Referenz-Spannung Ur. Hierfür sorgt ein Unijunktions-Transistor UJT, der aus zwei Einzeltransistoren T3 und T5 gebildet ist, wobei die Basis von T3 mit dem Kollektor von T5 und die Basis von T5 mit dem Kollektor von T3 verbunden ist. Solange das Potential am Emitter E2 des Transistors T3 höher liegt als die Referenz-Spannung Ur, sperrt der UJT einen Stromfluß über Widerstände R9 und R10.

Sobald die Kondensatorspannung einen Wert hat, der etwa 5 % größer ist als die Referenzspannung Ur, beginnt die Anstiegsflanke eines Nadelimpulses (t_{L} in **Fig. 2**) zu wachsen. Durch das Zünden von UJT fließt Strom über die Widerstände R9 und R10, wobei der Transistor T4 durch schnelles Sinken seines Basispotentials gegenüber seinem Emitter, schlagartig öffnet. Über die Dioden 40 und 50 wird ein Nadelimpuls NI (der dem Dirac'schen NI ähnlich ist) abgegeben. Dabei fließt auch ein Strom über die Diode 60 und Widerstände R7 und R8. Die Potentialerhöhung an der Basis von T2 öffnet diesen Transistor T2, weshalb der Transistor T1 schlagartig sperrt. Das Aufladen des Kondensators C wird damit unterbrochen. Die im Kondensator C gespeicherte Energie wird über den Transistor T4 und die Dioden 40 und 50 auf die Ausgänge 1' und 2' gegeben. Die Zeitspanne t_{D} in **Fig. 2** wird in der Schaltung nach **Fig. 5** definiert durch die Entladungsstrecke des Kondensators, die gebildet wird durch UJT, R10 und die Parallelschaltung aus dem Widerstand R9 und der Basis-Emitterstrecke des Transistors T4 einschließlich des Widerstands R6.

Die Öffnungszeit des UJT hält so lange an, bis der Kondensator C fast völlig entladen ist. Nur vor der Zündung des ersten NI ist dieser Kondensator C völlig leer gewesen, weshalb die erste Zeitspanne To realtiv lang ist. Das Schließen des UJT erfolgt in der Zeitspanne t_{T} in **Fig. 2**.

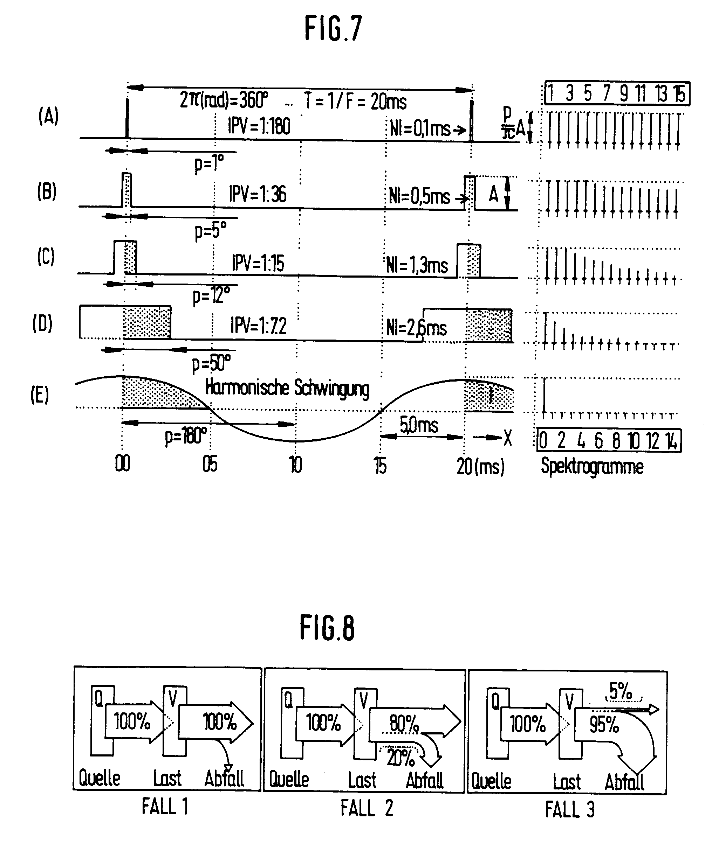

In **Fig. 6** ist eine Schaltungsanordnung dargestellt, die einerseits eine herkömmliche Vorrichtung zum Speisen einer Glühbirne als Last und andererseits eine erfindungsgemäße Vorrichtung zeigt.

An ein 220 V-Wechselspannungsnetz sind zwei Transformatoren TR1 und TR2 angeschlossen. An der Sekundärseite von TR1 wird eine 15-V-Wechselspannung von einem Vollweggleichrichter gleichgerichtet und auf einen Ausgangs-Klinkenanschluß für eine 12-V-Glühbirne GB gegeben. Am Ausgang liegen ein Strom- und ein Spannungsmesser. Mit dem mechanischen Hauptschalter HS, kann man diesen Verbraucherstromkreis kontrollieren.

Die Sekundärspule von TR2 liefert eine Wechselspannung von 48 V an einen Vollweggleichrichter. Eine Batteriespannung von ca. 60 V Gleichspannung steht so am Kondensator CE zur Verfügung.

Der NIG erzeugt daraus einen Nadelimpulszug in der oben in Verbindung mit **Fig. 5** beschriebenen Weise. Die Nadelimpulse werden auf den Ausgang gegeben, an den als Last die 12 V-Glühbirne angeschlossen ist. In einem Klinkenstecker HS ist ein Potentiometer eingebaut, so daß diese Vorrichtung als Steuerelement der NI-Pausen dient und so auf einfachste Weise die volle Steuerung des betreffenden Stromkreises ermöglicht.

Eine gemäß Fig. 6 aufgebaute Schaltungsanordnung hat im Betrieb gezeigt, daß die Speisevorrichtung im unteren Teil, also die gemäß der vorliegenden Erfindung ausgebildete Speisevorrichtung, die gleiche Helligkeit der Glühbirne GB bei nur halb so großer mittlerer Leistungsaufnahme ergab.

Weitere Versuche mit induktiven Lasten haben ähnliche Energieeinspareffekte gezeigt, beispielsweise wurde als induktive Last ein elektroakustischer Umformer mit Druckkammer (ein starker Lautsprecher) über die erfindungsgemäße Vorrichtung gespeist. Auch hier ergab sich eine beträchtliche Energieeinsparung gegenüber herkömmlichen Anordnungen.

Die Demonstrations-Anordnung nach **Fig. 6** erlaubt es, auf einer Vergleichsbasis die konventionelle und die erfindungsgemäße Art der Speisung einer Ohm'schen Last mit schlechtem Wirkungsgrad (Glühbirne) zu vergleichen.

Im linken Teil in **Fig. 7** sind Funktionen einer idealen harmonischen Schwingung (HS) und von vier Impuls-Zügen mit sehr verschiedenen Impuls/Pause-Verhältnissen zwischen 1:7,2 bis 1:180 dargestellt. Die Periode T aller Schwingungs-Funktionen ist absichtlich auf 20 Millisekunden Dauer abgestimmt, was bei der am unteren rechten Teil der Zeichnung liegender HS-Funktion genau die Wiederholfrequenz von 50 Hz ausmacht. Alle fünf Schwingungs-Funktionen haben (absichtlich) eine gleiche Amplitude A.

Der Anfang und das Ende der Periodendauer T beginnen in dem Höhepunkt der positiven Halbwelle der HS, in **Fig. 7** (E) links unten, beziehungsweise genau in der Mitte der Impulse in den vier Impuls-Zügen, um die Fourier-Reihen für betreffende Schwingungs-Funktionen einfacher darstellen zu können. Die Periode T ist auch als eine volle Kreisumdrehung mit 2 π (rad), beziehungsweise 360° dargestellt.

Die Zeitspanne der jeweiligen Impulse ist sowohl durch deren halben Öffnungswinkel" p, als auch durch ihre halbe Zeitspanne angegeben.

Laut Fourieranalyse sind alle Schwingungsfunktionen mit passenden Fourier-Reihen beschreibbar, so daß sie eine bestimmte, berechenbare und meßbare Anzahl reiner harmonischer Schwingungen mit definierten Frequenzen und dazu gehörenden Amplituden als Äquivalent darstellen. Setzt man die harmonischen Komponenten zusammen, so ergibt sich die Grundfunktion.

Die Spannungen der betreffenden fünf Schwingungs-Funktionen links in **Fig. 7** haben die Spektren, wie sie rechts in **Fig. 7** zu sehen sind. Es sei angemerkt, daß die Spektrum-Amplituden die harmonischen Komponenten für die vier Impulszüge nicht maßstabsgerecht gezeichnet sind (in der Zeichnung sind die Spektrallinien für die Nadelimpulszüge übertrieben vergrößert dargestellt).

Wie man sieht, entspricht die Amplitude A im Spektrum gemäß **Fig. 7 (E)** der harmonischen Schwingung genau der Amplitude im Zeitbereich.

Bei den Spektren der Impulszüge jedoch ergibt sich eine Menge aus mehreren harmonischen Komponenten.

Die Menge ist umso größer, je schmaler die Impulse sind.

Erfindungsgemäß werden Nadelimpulse mit einem Tastverhältnis von 1:3 verwendet, die so schmal wie möglich sind, etwa so wie die Nadelimpulse gemäß **Fig. 7 (A)**, **Fig. 7 (B)** und **Fig. 7 (C)**, aber auch noch gemäß **Fig. 7 (D)**.

Die Impulse gemäß **Fig. 7 (D)** besitzen jeweils ein Spektrum, in welchem die einzelnen Spektralien sehr ungleichmäßig sind. Die Amplituden können sehr unterschiedlich bemessen sein, anders, als es in **Fig. 7** schematisch dargestellt ist.

Ein für die erfindungsgemäßen Zwecke besonders günstigeres Spektrum besitzen die beiden oberen in **Fig. 7** dargestellten Spektren. Das praktisch ideale Spektrum besitzt der in **Fig. 7 (A)** dargestellte Nadelimpulszug, der mit derzeit verfügbaren Schaltungsmitteln in der Praxis größenordnungsmäßig realisiert werden kann. Die einzelnen Komponenten des Spektrums sind praktisch alle gleich groß und besitzen jeweils einen sehr kleinen Amplitudenwert, wesentlich kleiner, als es in **Fig. 7 (A)** dargestellt ist.

Das in **Fig. 7 (A)** rechts dargestellte Spektrum ist deshalb besonders günstig, weil aufgrund der kleinen Amplituden und der kurzen Zeitspanne dieser einzelnen Signalkomponenten eine gute Stabilität der mit diesem Signal gespeisten Schaltung erreicht wird.

Verwendet man für die erfindungsgemäße Vorrichtung einen Nadelimpulsgenerator, der die in **Fig. 7 (A)** dargestellten Nadelimpulse mit einem Tastverhältnis von 1:180 erzeugt, so erhält man eine sehr große Anzahl harmonischer Komponenten, deren Amplitude jeweils relativ klein ist und sich durch den Öffnungswinkel p = 1° = 0,028 rad ergibt. Die jeweils gleich großen Amplituden errechnen sich im vorliegenden Beispiel jeweils zu etwas weniger als 1 % der Impulsamplitude.

Die obigen Betrachtungen gelten für den Bereich der Gültigkeit des Ohm'schen Gesetzes. Die Gültigkeit des Ohm'schen Gesetzes ist auf jeden Fall dann gegeben, wenn die Periodendauer T (siehe **Fig. 3**) größer als 100 Nanosekunden ist. Kürzere Periodendauern lassen sich wegen der nicht verfügbaren elektronischen Bauelemente jetzt und in absehbarer Zeit kaum realisieren.

Die obigen Betrachtungen zeigen also, daß durch die erfindungsgemäße Verwendung von sehr schmalen Nadelimpulsen zum Speisen einer Ohm'schen, induktiven, kapazitiven oder komplexen Last stets eine sehr hohe Stabilität des Betriebes der Schaltung erreicht wird. Es ist bekannt, daß beim Anschalten einer Last an eine Spannungsquelle, insbesondere an eine Wechselspannungsquelle, Einschwingvorgänge stattfinden können, deren Vermeidung aufwendige schaltungstechnische Maßnahmen erforderlich macht. Derartige Probleme werden durch die erfindungsgemäße Verwendung der Nadelimpulse von vornherein ausgeschlossen.

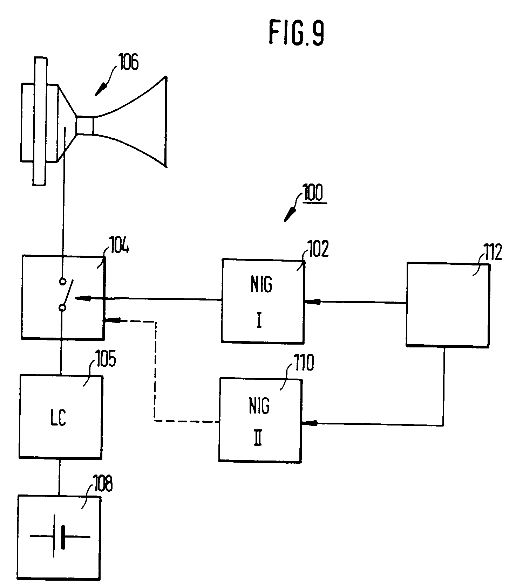

**Fig. 8** zeigt schematisch drei Fälle eines Energieflusses. Einen verlustfreien Energiefluß gibt es in der Praxis nicht.

Der links in **Fig. 8** dargestellte Fall 1 ist ideal. Von einer Quelle Q fließen 100 % Energie in einen Verbraucher V, wo die gesamte Energie in Arbeit umgesetzt wird, also keinerlei "Abfallenergie" entsteht.

Der in der Mitte in **Fig. 8** dargestellte Fall 2 zeigt die in der Praxis häufige Situation, daß der Großteil der Energie (hier 80 %) im Verbraucher in Nutzarbeit umgesetzt wird und nur 20 % verloren gehen.

Rechts in **Fig. 8** ist der Fall 3 dargestellt, bei dem lediglich 5 % der eingespeisten Energie in Nutzarbeit umgesetzt wird, die restliche Energie Abfallenergie darstellt. Dieser Fall entspricht ziemlich genau dem einer elektrischen Glühbirne, in der etwa 5 % der eingespeisten elektrischen Energie in Licht umgesetzt werden, während die übrigen 95 % in (meist unerwünschte) Wärme umgesetzt werden. Durch die erfindungsgemäße Maßnahme wird eine Verbesserung der durch den Fall 3 charakterisierten Situation in Richtung Fall 2 erreicht.

Die obigen Betrachtungen beziehen sich vornehmlich auf Ohm'sche Lasten. Die Erfindung ist aber gleichermaßen anwendbar bei induktiven, kapazitiven oder auch komplexen Lasten. Wenn bei derartigen Lasten auch nicht von Wirkenergie gesprochen werden kann, so zeigen Betrachtungen des Scheinenergieflusses (bei einer induktiven oder kapazitiven Last), daß durch die erfindungsgemäße Vorrichtung nicht nur ein besserer Wirkungsgrad, sondern auch eine erhöhte Stabilität erreicht wird.

Durch die in **Fig. 1** und **Fig. 4** dargestellte Vorrichtung lassen sich weiterhin bestimmte Vorteile erreichen, die bei den derzeit üblichen Schaltvorrichtungen nicht erreicht werden:
a) Beim Einschalten der Last liegt an der Schaltung eine Spannung von 0 Volt, was von der jeweils gewählten Anordnung des Schaltkreises abhängt.
b) Man kann eine stufenlose Regelung von 0 bis zu einem Maximalwert vornehmen, ohne daß hierzu besondere schaltungstechnische Maßnahmen erforderlich sind. Die zum Erzeugen der Nadelimpulse (NI) verwendeten Impulsgeber sind so aufgebaut, daß sie ohne besonderen Aufwand eine Änderung der Impulspausen gestatten.

**Fig. 9** zeigt anhand eines Blockdiagramms den Aufbau einer elektronischen Sirene 100. Ein mit einem Exponentialtrichter versehener elektroakustischer Wandler 106 ist an die Endstufe 104 einer hier nicht näher interessierenden Verstärkerschaltung angeschlossen. Der schematisch dargestellte und in Wirklichkeit als Halbleiterbauelement ausgeführte Schalter der Endstufe 104 wird von einem Nadelimpulsgenerator (NIG I) 102 angesteuert, wobei die Frequenz der von dem NIG 102 kommenden Dirac-Nadel-impulse 420 Hz beträgt (genau gesagt: die erste harmonische Schwingung), was der Soll-Frequenz der Sirene entspricht. Der Schalter in der Endstufe 104 verbindet den elektroakustischen Wandler 106 über ein LC-Filter 105 (Spule und Kondensator) mit einer Batterie 108. Der NIG 102 wird von einer Steuerung 112 angesteuert, bei der es sich um eine an sich bekannte Programmsteuerung handeln kann, wie sie bei elektronischen Sirenen üblich ist. In der Praxis kann die Endstufe 104 im wesentlichen lediglich aus dem genannten Schalter bestehen.

Im Gegensatz zu bekannten elektronischen Sirenen ist die Betriebsweise der Sirene nach **Fig. 9** rein digital.

Ein wesentlicher Vorteil der in **Fig. 9** dargestellten Sirene ist der Umstand, daß praktisch kein Ruhestrom fließt. Wenn kein Nadel impuls auf die Endstufe gegeben wird, ist der durch die Endstufe gebildete Schalter praktisch geöffnet. Der Innenwiderstand des Endstufen-Ausgangs ist praktisch Null, was einen praktisch verlustfreien Betrieb ermöglicht.

Aufgrund der Natur der hier zum Einsatz gelangenden Nadelimpulse sind neben der Arbeitsfrequenz von 420 Hz zahlreiche Oberschwingungen vorhanden, was insgesamt einen vollen Sirenenton ergibt.

Die erfindungsgemäße Sirene nach **Fig. 9** ermöglicht in besonders günstiger Weise die Ausnutzung des an sich bekannten "Masking-Effekts". Dieser entsteht durch Erzeugung von zwei eng benachbarten, aber sicher unterschiedlichen und nicht durch einen ganzzahligen Faktor verknüpften Frequenzen, wozu gemäß **Fig. 9** ein zusätzlicher NIG II 110 vorgesehen ist. Die Frequenz des NIG II ist gegenüber der des NIG I etwas verstimmt. Durch eine solche Ansteuerung entsteht ein Sirenenton, der - aus psychoakustischen Gründen - vom Hörer viel lauter empfunden wird, als etwa ein Ton, der durch zwei identische, gleichstarke Tonquellen erzeugt wird. Alternativ kann man für den NIG II eine eigene, weitere Endstufe vorsehen und den elektro-akustischen Wandler an die beiden Endstufen anschließen. Ferner wird darauf hingewiesen, daß man eine Mehrzahl elektronischer Wandler parallel, seriell oder gemischt an die Endstufe 104 oder das gesamte Endstufenpaar anschließen kann.

In einer praktischen, in der Zeichnung nicht dargestellten Ausführungsform sind mehrere Sirenen des in **Fig. 9** dargestellten Typs in einem Sirenen-Turm untergebracht, wobei die Exponentialtrichter jedes elektroakustischen Wandlers in unterschiedlichen Höhen und mit unterschiedlichen Abstrahlwinkeln bezüglich einer vertikalen Achse dieses Turms angeordnet sind.

Der NIG I 102 und der NIG II 110 sind so aufgebaut wie der weiter vorn beschriebene NIG 68 (**Fig. 5**).

Praktische Versuche zeigen, daß eine erfindungsgemäße elektronische elektronische Sirene 100 die Schalleistung einer herkömmlichen elektronischen Sirene mit nur etwa einem Drittel der elektrischen Leistung erzeugen kann. Sie kann daher mit preisgünstigerer Elektronik gebaut werden.

Da bei nicht eingeschalteter Sirene 100 im NIG I 102, im NIG II 110 und in der Endstufe 104 praktisch kein Ruhestrom fließt, wird in diesem Zustand nahezu kein Strom verbraucht. Dennoch hat man beim Einschalten der Sirene 100 einen "warmen Start" der Elektronikbauteile.

Die erfindungsgemäße Sirene 100 kann, wenn gewünscht, mit sehr hoher Speisespannung, z.B. bis 400 V, betrieben werden.

Man kann mit der erfindungsgemäßen Vorrichtung zum Betreiben von Wechselstrom-Elektromotoren ein Drehfeld erzeugen, wobei gegenüber den konventionellen Motorsteuerungen erhebliche Energieeinsparungen und Vereinfachungen der Synchronisation erreicht werden.

## Patentansprüche

1. Vorrichtung zum Speisen einer eine vorgegebene Nennspannung (UZₙₑₙₙ) aufweisenden elektrischen Last (L), mit einem Eingang für den Anschluß an eine Versorgungsspannungsquelle und einem Ausgang für den Anschluß an die Last (L), und mit einem Nadelimpulsformer (6, 68), der an den an die Last angeschlossenen Ausgang einen Zug von Nadelimpulsen (NI) legt,
dadurch gekennzeichnet,
daß die Spannungsamplitude (UB) der Nadelimpulse (NI) mindestens um den Faktor 1,7, aber höchstens um den Faktor "Quadratwurzel aus Dauer der Impulspause dividiert durch Impulsdauer" (UB ≤ UZₙₑₙₙ · SQR (tₚ/t_{I})), größer als die Nennspannung (UZₙₑₙₙ) ist.

2. Vorrichtung zum Speisen einer eine vorgegebene Nennspannung (UZₙₑₙₙ) aufweisenden elektrischen Last (L), mit einem Eingang für den Anschluß an eine Versorgungsspannungsquelle und einem Ausgang für den Anschluß an die Last (L), und mit einem Nadelimpulsformer (6, 68), der an den an die Last angeschlossenen Ausgang einen Zug von Nadelimpulsen (NI) legt,
dadurch gekennzeichnet,
daß der Nadelimpulsformer (6, 68) mit einer elektronischen Schaltung aufgebaut ist, die aufweist:
(a) einen von einer Konstantstromquelle (T1) aufladbaren Kondensator (C);
(b) einen mit zwei Widerständen (R13, R14) gebildeten Spannungsteiler zur Erzeugung einer Referenzspannung (Uᵣ);
(c) einen an die Referenzspannung (Uᵣ) und die Kondensatorspannung (U_{c}) angeschlossenen Unijunktionstransistor (UJT). der zündet, sobald die Kondensatorspannung (U_{c}) etwas größer als die Referenzspannung (Uᵣ) wird;
(d) und einen an den Unijunktionstransistor (UJT) und den Kondensator (C) angeschlossenen Endtransistor (T4), der durch das Zünden des Unijunktionstransistors (UJT) für die Dauer eines Nadelimpulses (NI) leitend geschaltet wird.

3. Vorrichtung nach Anspruch 2,
dadurch gekennzeichnet,
daß die Spannungsamplitude (UB) der Nadelimpulse (NI) mindestens um einen Faktor 1,7 größer als die Nennspannung (UZₙₑₙₙ) ist.

4. Vorrichtung nach Anspruch 2 oder 3,
dadurch gekennzeichnet,
daß die Spannungsamplitude (UB) der Nadelimpulse (NI) höchstens um den Faktor "Quadratwurzel aus Dauer der Impulspause dividiert durch Impulsdauer (UB ≤ UZₙₑₙₙ · SQR (tₚ/t_{I})), größer als die Nennspannung (UZₙₑₙₙ) ist.

5. Vorrichtung nach einem der Ansprüche 1 bis 4,
dadurch gekennzeichnet,
daß die Nadelimpulse (NI) jeweils eine konstante Impulsbreite (t_{I}) aufweisen und nur die Pause (tₚ) zwischen zwei benachbarten Nadelimpulsen (NI) veränderbar ist.

6. Vorrichtung nach Anspruch 5,
dadurch gekennzeichnet,
daß das Tastverhältnis (t_{I}/tₚ) von etwas über "0" bis zu 0,3 beträgt, wobei t_{I} die konstante Impulsdauer, tₚ die veränderliche Impulspause bedeutet.

7. Vorrichtung nach einem der Ansprüche 1 bis 6,
dadurch gekennzeichnet,
daß die Nadelimpulse (NI) Gleichstromimpulse, d. h. Impulse gleicher Polarität sind.

8. Vorrichtung nach einem der Ansprüche 1 bis 7,
dadurch gekennzeichnet,
daß zu der Last (L) eine Diode (D2) antiparallel geschaltet ist.

9. Vorrichtung nach einem der Ansprüche 1 bis 8,
dadurch gekennzeichnet,
daß die Vorrichtung einen elektronischen schnellen Schalter (66) aufweist.

10. Vorrichtung nach Anspruch 7,
dadurch gekennzeichnet,
daß der Eingang mit einem LC-Filter (62, 64) beschaltet ist.

11. Vorrichtung nach einem der Ansprüche 1 bis 10,
dadurch gekennzeichnet,
daß dem Ausgang eine Rückstrom-Sperrdiode (D1) vorgeschaltet ist.

12. Vorrichtung nach einem der Ansprüche 1 bis 10,
dadurch gekennzeichnet,
daß die Last eine überwiegend Ohm'sche, induktive oder kapazitive Last ist.

13. Vorrichtung nach Anspruch 12,
dadurch gekennzeichnet,
daß die Last eine Glühbirne ist.

14. Vorrichtung nach einem der Ansprüche 1 bis 13,
dadurch gekennzeichnet,
daß die Nadelimpulse (NI) eine Gesamtdauer von maximal 1000 ns, vorzugsweise maximal 700 ns haben.

15. Vorrichtung nach einem der Ansprüche 1 bis 14,
dadurch gekennzeichnet,
daß die Nadelimpulse (NI) eine Anstiegszeit von maximal 100 ns aufweisen.

16. Vorrichtung nach einem der Ansprüche 1 bis 15,
dadurch gekennzeichnet,
daß die Nadelimpulse (NI) eine durch den Funktionsverlauf gegebene Dauer (t_{D}) von maximal 200 ns, vorzugsweise maximal 100 ns haben.

17. Vorrichtung nach einem der Ansprüche 1 bis 16,
dadurch gekennzeichnet,
daß die Nadelimpulse (NI) eine Abfallzeit von maximal 500 ns haben.

18. Vorrichtung nach einem der Ansprüche 1 bis 17,
dadurch gekennzeichnet,
daß die kleinste Periodendauer (T) der Nadelimpulse ca. 100 ns beträgt.

19. Vorrichtung nach einem der Ansprüche 1 bis 12 und 14 bis 18,
dadurch gekennzeichnet,
daß die Last eine elektronische Sirene (100) ist.

20. Vorrichtung nach Anspruch 19,
dadurch gekennzeichnet,
daß ein Nadelimpulsgenerator (102) eine Verstärkerendstufe (104) ansteuert, die eine Stromquelle (108) mit einem elektroakustischen Wandler (106) der Sirene (100) verbindet.

## Claims

1. An apparatus for feeding an electrical load (L) having a predetermined nominal voltage (UZₙₒₘ), comprising an input for connection to a supply voltage source and an output for connection to the load (L), and comprising a needle pulse shaper (6, 68) applying a train of needle pulses (NI) to the output connected to the load,
characterized in that the voltage amplitude (UB) of the needle pulses (NI) is greater than the nominal voltage (UZₙₒₘ) at least by the factor of 1.7, but at the most by the factor "square root of the duration of the pulse interval divided by the pulse duration" (UB ≤ UZₙₒₘ · SQR (tₚ/t_{I})).

2. An apparatus for feeding an electrical load (L) having a predetermined nominal voltage (UZₙₒₘ), comprising an input for connection to a supply voltage source and an output for connection to the load (L), and comprising a needle pulse shaper (6, 68) applying a train of needle pulses (NI) to the output connected to the load,
characterized in that the needle pulse shaper (6, 58) is composed with an electronic circuit comprising:
(a) a capacitor (C) adapted to be charged by a constant current source (T1);
(b) a voltage divider formed with two resistors (R13, R14) and serving to produce a reference voltage (Uᵣ);
(c) a unijunction transistor (UJT) connected to the reference voltage (Uᵣ) and to the capacitor voltage (U_{c}) and firing as soon as the capacitor voltage (U_{c}) becomes slightly greater than the reference voltage (Uᵣ);
(d) and a final transistor (T4) which is connected to the unijunction transistor (UJT) and to the capacitor (C) and, by firing of said unijunction transistor (UJT), is switched into the conductive state for the duration of one needle pulse (NI).

3. An apparatus according to claim 2,
characterized in that the voltage amplitude (UB) of the needle pulses (NI) is greater than the nominal voltage (UZₙₒₘ) at least by a factor of 1.7.

4. An apparatus according to claim 2 or 3,
characterized in that the voltage amplitude (UB) of the needle pulses (NI) is greater than the nominal voltage (Uzₙₒₘ) at the most by the factor "square root of the duration of the pulse interval divided by the pulse duration" (UB ≤ UZₙₒₘ · SQR ^{(t}p^{/t}I^{)).}

5. An apparatus according to any one of claims 1 to 4,
characterized in that the needle pulses (NI) each are of constant pulse width (t_{I}) and only the interval (tₚ) between two adjacent needle pulses (NI) is variable.

6. An apparatus according to claim 5,
characterized in that the duty cycle (t_{I}/tₚ) is from slightly above "0" to 0.3, wherein t_{I} is the constant pulse duration and tₚ is the variable pulse interval.

7. An apparatus according to any one of claims 1 to 6,
characterized in that the needle pulses (NI) are constant current pulses, i.e. pulses of the same polarity.

8. An apparatus according to any one of claims 1 to 7,
characterized in that a diode (D2) is connected antiparallel to the load (L).

9. An apparatus according to any one of claims 1 to 8,
characterized in that the apparatus comprises an electronic rapid switch (66).

10. An apparatus according to claim 7,
characterized in that the input has an LC filter (62, 64) connected thereto.

11. An apparatus according to any one of claims 1 to 10,
characterized in that the output has a reverse flow blocking diode (D1) connected upstream thereof.

12. An apparatus according to any one of claims 1 to 11,
characterized in that the load is a mainly ohmic, inductive or capacitive load.

13. An apparatus according to claim 12,
characterized in that the load is an incandescent bulb.

14. An apparatus according to any one of claims 1 to 13,
characterized in that the needle pulses (NI) have an overall duration of at most 1000 ns, preferably at most 700 ns.

15. An apparatus according to any one of claims 1 to 14,
characterized in that the needle pulses (NI) have a rise time of at most 100 ns.

16. An apparatus according to any one of claims 1 to 15,
characterized in that the needle pulses (NI) have a duration (t_{D}) of at most 200 ns, preferably at most 100 ns, which is determined by the functional course.

17. An apparatus according to any one of claims 1 to 16,
characterized in that the needle pulses (NI) have a decay time of at most 500 ns.

18. An apparatus according to any one of claims 1 to 17,
characterized in that the smallest period duration (T) of the needle pulses is approx. 100 ns.

19. An apparatus according to any one of claims 1 to 12 and 14 to 18,
characterized in that the load is an electronic siren (100).

20. An apparatus according to claim 19,
characterized in that a needle pulse generator (102) controls an amplifier final stage (104) connecting a current source (108) to an electroacoustic transducer (106) of the siren (100).

## Revendications

1. Dispositif pour alimenter une charge électrique (L) présentant une tension nominale prédéterminée (UZₙₑₙₙ), comprenant une entrée de raccordement à un générateur de tension d'alimentation et une sortie de raccordement à la charge (L) et comprenant un circuit de mise en forme d'impulsion en forme de pointe (6, 68) qui applique un train d'impulsions en forme de pointe (NI) à la sortie raccordée à la charge,
caractérisé en ce que
l'amplitude de tension (UB) de l'impulsion en forme de pointe (NI) est plus grande au moins du facteur 1,7 mais au plus du facteur "racine carrée de la durée de l'intervalle entre impulsions divisée par la durée de l'impulsion" (UB≤UZₙₑₙₙ*SQR(t_{P}/t_{I})) que la tension nominale (UZₙₑₙₙ).

2. Dispositif pour alimenter une charge électrique (L) présentant une tension nominale prédéterminée (UZₙₑₙₙ), comprenant une entrée de raccordement à un générateur de tension d'alimentation et une sortie de raccordement à la charge (L) et comprenant un circuit de mise en forme d'impulsion en forme de pointe (6, 68) qui applique un train d'impulsions en forme de pointe (NI) à la sortie raccordée à la charge,
caractérisé en ce que
le circuit de mise en forme d'impulsion en forme de pointe (6, 68) comprend un commutateur électronique qui présente :
(a) un condensateur (C) pouvant être chargé par une alimentation en courant constant (T1);
(b) un diviseur de tension formé de deux résistances (R13, R14) destiné à engendrer une tension de référence (Uᵣ);
(c) un transistor unijonction (UJT) raccordé à la tension de référence (Uᵣ) et à la tension de condensateur (U_{c}) qui s'allume dès que la tension de condensateur (U_{c}) devient plus grande que la tension de référence (Uᵣ);
(d) et un transistor terminal (T4) raccordé au transistor unijonction (UJT) et au condensateur (C), qui est commuté à l'état conducteur par l'allumage du transistor unijonction (UJT) pendant la durée d'une impulsion en forme de pointe (NI).

3. Dispositif selon la revendication 2,
caractérisé en ce que
l'amplitude de tension (UB) de l'impulsion en forme de pointe (NI) est plus grande d'au moins un facteur 1,7 que la tension nominale (UZₙₑₙₙ).

4. Dispositif selon la revendication 2 ou 3,
caractérisé en ce que
l'amplitude de tension (UB) de l'impulsion en forme de pointe (NI) est plus grande d'au plus le facteur "racine carrée de la durée de l'intervalle entre impulsions divisé par la durée de l'impulsion" (UB≤UZₙₑₙₙ*SQR(t_{P}/t_{I})) que la tension nominale (UZₙₑₙₙ)

5. Dispositif selon l'une quelconque des revendications 1 à 4,
caractérisé en ce que
les impulsions en forme de pointe (NI) présentent chacune une largeur d'impulsion (t_{I}) constante et seul l'intervalle (t_{P}) entre deux impulsions en forme de pointe (NI) voisines peut être modifié.

6. Dispositif selon la revendication 5,
caractérisé en ce que
le taux d'impulsions (t_{I}/t_{P}) s'élève d'environ plus de 0 à 0,3, t_{I} étant la durée d'impulsion constante et t_{P} l'intervalle variable entre impulsions.

7. Dispositif selon l'une quelconque des revendications 1 à 6,
caractérisé en ce que
les impulsions en forme de pointe (NI) sont des impulsions à courant de sens constant, c'est-à-dire des impulsions de même polarité.

8. Dispositif selon l'une quelconque des revendications 1 à 7,
caractérisé en ce que
une diode (D2) est montée antiparallèle à la charge (L).

9. Dispositif selon l'une quelconque des revendications 1 à 8,
caractérisé en ce que
le dispositif présente un commutateur électronique rapide (66).

10. Dispositif selon la revendication 7,
caractérisé en ce que
l'entrée est filtrée par un filtre LC (62, 64).

11. Dispositif selon l'une quelconque des revendications 1 à 10,
caractérisé en ce que
une diode d'interruption de retour de courant (D1) est placée en amont de la sortie.

12. Dispositif selon l'une quelconque des revendications 1 à 10,
caractérisé en ce que
la charge est une charge principalement ohmique, inductive ou capacitive.

13. Dispositif selon la revendication 12,
caractérisé en ce que
la charge est une lampe à incandescence.

14. Dispositif selon l'une quelconque des revendications 1 à 13,
caractérisé en ce que
les impulsions en forme de pointe (NI) ont une durée totale d'au plus 1000 ns, de préférence d'au plus 700 ns.

15. Dispositif selon l'une quelconque des revendications 1 à 14,
caractérisé en ce que
les impulsions en forme de pointe (NI) présentent un temps de croissance d'au plus 100 ns.

16. Dispositif selon l'une quelconque des revendications 1 à 15,
caractérisé en ce que
les impulsions en forme de pointe (NI) ont une durée (t_{D}) donnée par l'évolution de la fonction d'au plus 200 ns, de préférence d'au plus 100 ns.

17. Dispositif selon l'une quelconque des revendications 1 à 16,
caractérisé en ce que
les impulsions en forme de pointe (NI) ont un temps de décroissance d'au plus 500 ns.

18. Dispositif selon l'une quelconque des revendications 1 à 17,
caractérisé en ce que
la période (T) la plus courte des impulsions en forme de pointe s'élève à environ 100 ns.

19. Dispositif selon l'une quelconque des revendications 1 à 12 et 14 à 18,
caractérisé en ce que
la charge est une sirène électronique (100).

20. Dispositif selon la revendication 19,
caractérisé en ce que
un générateur d'impulsions en forme de pointe (102) pilote un étage de sortie d'amplificateur (104) qui relie une alimentation électrique (108) à un transducteur électroacoustique (106) de la sirène (100).
